# EUROPEAN PATENT APPLICATION

(11) **EP 4 624 168 A1**
(43) Date of publication of application: **01.10.2025**
(21) Application number: 25165766.4
(22) Date of filing: 24.03.2025
(51) Int. Cl.: B41J 2/175, B41J 2/19, B41J 2/165

(54) **NEGATIVE PRESSURE REGULATION VALVE AND INKJET RECORDING APPARATUS INCLUDING THE SAME**

(30) Priority: 28.03.2024 JP 2024052903
(71) Applicant: Kyocera Document Solutions Inc., Osaka-shi, Osaka 540-8585 (JP)
(72) Inventor: Ishida, Hideki, Osaka, 540-8585 (JP); Satake, Kenichi, Osaka, 540-8585 (JP); Yoneda, Shogo, Osaka, 540-8585 (JP); Tsuboi, Shun, Osaka, 540-8585 (JP)
(74) Representative: BRP Renaud & Partner mbB Rechtsanwälte Patentanwälte Steuerberater

(57) **Abstract**

A negative pressure regulation valve (31) includes an inflow-side pressure chamber (50), an outflow-side pressure chamber (51), a communication hole (54), and a valve member (52). The valve member (52) is inserted in the communication hole (54) and movable, in accordance with change of pressure inside the outflow-side pressure chamber (51), to a closing position for closing the communication hole (54) and an opening position for opening the communication hole (54). The outflow-side pressure chamber (51) includes, as a liquid outflow hole (51a, 51b), a first outflow hole (51a) formed below the communication hole (54) and a second outflow hole (51b) formed above the communication hole (54). In a case where a first fluid flows out from the outflow-side pressure chamber (51) via the first outflow hole (51a) and the second outflow hole (51b), a first flow path resistance (R1) generated when the first fluid passes through the first outflow hole (51a) is lower than a second flow path resistance (R2) generated when the first fluid passes through the second outflow hole (51b).

## Description

### BACKGROUND

The present disclosure relates to a negative pressure regulation valve for use in an inkjet recording apparatus, and an inkjet recording apparatus including the negative pressure regulation valve.

In inkjet recording apparatuses, it is important to constantly maintain the ink ejection state and conditions to ensure high print quality. For this purpose, a configuration is adopted in which an ink flow path connecting an ink container and a recording head is provided with a pressure regulating portion (a negative pressure regulation valve, a damper, or the like) that regulates pressure by storing ink.

### SUMMARY

The present disclosure aims to provide a negative pressure regulation valve capable of suppressing residue of air, solid matter, etc., in an outflow-side pressure chamber by means of a simple configuration, and an inkjet recording apparatus including the same.

According to one aspect of the present disclosure, a negative pressure regulation valve is connected to a liquid flow path that allows communication between a liquid reservoir portion, which contains a liquid, and a liquid ejection portion, which ejects the liquid. The negative pressure regulation valve includes an inflow-side pressure chamber, an outflow-side pressure chamber, a communication hole, and a valve member. The inflow-side pressure chamber includes a liquid inflow hole that communicates with a liquid inflow path that is the liquid flow path on a side of the liquid reservoir portion. The outflow-side pressure chamber includes a liquid outflow hole that communicates with a liquid outflow path that is the liquid flow path on a side of the liquid ejection portion. The communication hole allows communication between the inflow-side pressure chamber and the outflow-side pressure chamber. The valve member is inserted in the communication hole and movable, in accordance with change of pressure inside the outflow-side pressure chamber, between a closing position for closing the communication hole and an opening position for opening the communication hole. The outflow-side pressure chamber includes, as the liquid outflow hole, a first outflow hole formed below the communication hole and a second outflow hole formed above the communication hole. In a case where a first fluid flows out from the outflow-side pressure chamber via the first outflow hole and the second outflow hole, a first flow path resistance generated when the first fluid passes through the first outflow hole is lower than a second flow path resistance generated when the first fluid passes through the second outflow hole.

### BRIEF DESCRIPTION OF THE DRAWINGS

FIG. 1 is an explanatory diagram schematically illustrating a configuration of a printer 100 as an inkjet recording apparatus according to one embodiment of the present disclosure.
FIG. 2 is a plan view of a recording portion 9 that the printer 100 includes.
FIG. 3 is a schematic configuration diagram illustrating an arrangement of an ink flow path 40, a negative pressure regulation valve 31, and a recording head 17, the latter two being connected to the ink flow path 40.
FIG. 4 is a side sectional view of the negative pressure regulation valve 31 according to the present embodiment.
FIG. 5 is a schematic diagram illustrating the negative pressure regulation valve 31 of the present embodiment as seen from the front side, the diagram illustrating how solid matter S and air A are discharged during an execution of a suction purge process.
FIG. 6 is a schematic diagram illustrating a negative pressure regulation valve 31 of a comparative example as seen from the front side, where first and second outflow holes 51a and 51b have equal inner diameters, the diagram illustrating how solid matter S and air A are discharged during an execution of the suction purge process.

### DETAILED DESCRIPTION

### [1. Configuration of Inkjet Recording Apparatus]

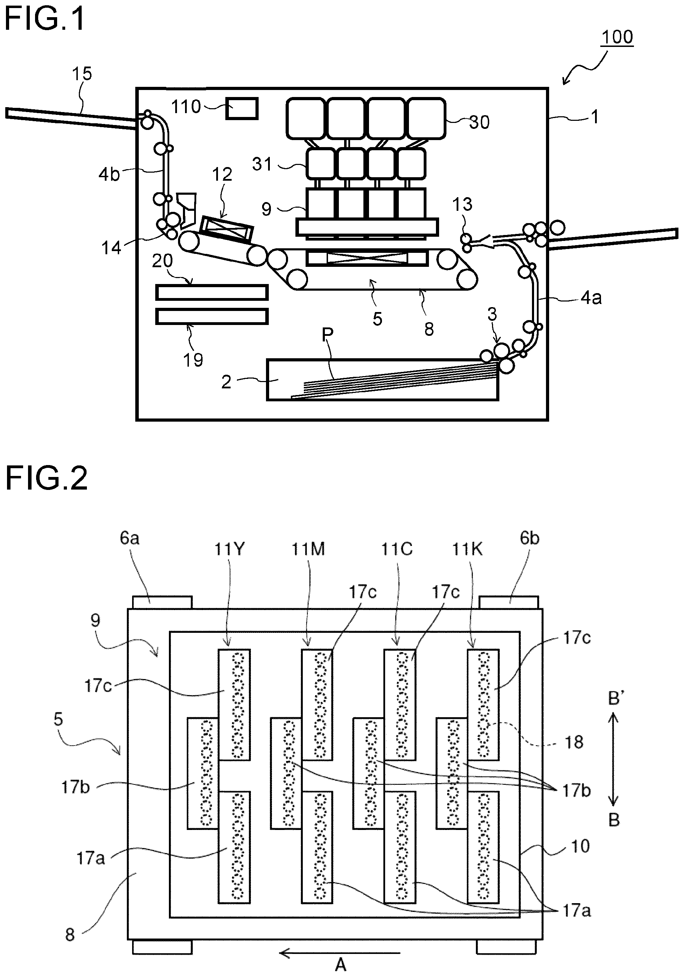

Hereinafter, an embodiment of the present disclosure will be described with reference to the accompanying drawings. FIG. 1 is an explanatory diagram schematically illustrating a configuration of a printer 100 as an inkjet recording apparatus according to one embodiment of the present disclosure. The printer 100 includes a sheet feeding cassette 2 that is a sheet storage portion. The sheet feeding cassette 2 is disposed in a lower part inside a printer main body 1. Inside the sheet feeding cassette 2, a sheet P is stored as one example of a recording medium.

On a downstream side of the sheet feeding cassette 2 in a sheet conveyance direction, that is, on an upper right side of the sheet feeding cassette 2 in FIG. 1, a sheet feeding device 3 is disposed. By the sheet feeding device 3, sheets P are sent out, one by one separately, toward the upper right side of the sheet feeding cassette 2 in FIG. 1.

The printer 100 includes a first sheet conveyance path 4a disposed inside thereof. The first sheet conveyance path 4a is disposed, with respect to the sheet feeding cassette 2, on the upper right side, toward which a sheet P is fed from the sheet feeding cassette 2. A sheet P sent out from the sheet feeding cassette 2 is, by the first sheet conveyance path 4a, conveyed vertically upward along a side surface of the printer main body 1.

At a downstream end of the first sheet conveyance path 4a in the sheet conveyance direction, a pair of registration rollers 13 are disposed. Furthermore, immediately close to the pair of registration rollers 13 on a downstream side thereof in the sheet conveyance direction, a first conveyance unit 5 and a recording portion 9 are disposed. A sheet P sent out from the sheet feeding cassette 2 passes through the first sheet conveyance path 4a and reaches the pair of registration rollers 13. The pair of registration rollers 13, while correcting skew feeding of the sheet P, send out the sheet P toward the first conveyance unit 5 (in particular, a first conveyance belt 8 which will be described later), with timing coordinated with an ink ejecting operation that the recording portion 9 executes.

FIG. 2 is a plan view of the recording portion 9. The recording portion 9 includes a head housing 10 and line heads 11Y, 11M, 11C, and 11K. The line heads 11Y to 11K are held in the head housing 10 at such a height that maintains a predetermined distance (e.g., 1 mm) from a conveyance surface of the first conveyance belt 8, which is an endless belt stretched by a plurality of rollers including a driving roller 6a, a driven roller 6b, and a tension roller (unillustrated). The driving roller 6a causes the first conveyance belt 8 to rotate in the conveyance direction (an arrow-A direction) of a sheet P.

The line heads 11Y to 11K each have a plurality of (here, three) recording heads 17a to 17c. The recording heads 17a to 17c are arranged in a staggered manner along a sheet width direction (an arrow-BB' direction) that is orthogonal to the sheet conveyance direction (the arrow-A direction). The recording heads 17a to 17c each have a plurality of ink ejection ports 18 (nozzles). The ink ejection ports 18 are arranged at regular intervals in a recording-head width direction, that is, the sheet width direction (the arrow-BB' direction). From each of the line heads 11Y to 11K, via the ink ejection ports 18 of the recording heads 17a to 17c, ink in yellow (Y), magenta (M), cyan (C), or black (K) is ejected toward the sheet P conveyed by the first conveyance belt 8.

The recording heads 17a to 17c constituting each of the line heads 11C to 11K are supplied, from an ink container 30 (see FIG. 1), with ink in one of the four colors (yellow, magenta, cyan, and black) corresponding to the colors of the line heads 11C to 11K. Between the ink container 30 and the recording heads 17a to 17c, a negative pressure regulation valve 31 (see FIG. 1) is coupled. A detailed configuration of the negative pressure regulation valve 31 will be described later.

Based on a control signal from a control device 110 (see FIG. 1), each of the recording heads 17a to 17c, in accordance with image data received from an external computer, ejects ink through the ink ejection ports 18 toward a sheet P, which is conveyed by being held by suction on the conveyance surface of the first conveyance belt 8. Thereby, on the sheet P held on the first conveyance belt 8, a color image is formed by superimposing inks in yellow, magenta, cyan, and black on one another.

Referring back to FIG. 1, the sheet P having been sent out by the pair of registration rollers 13 to the first conveyance unit 5 is conveyed by the first conveyance belt 8 to a position at which it faces the recording portion 9 (in particular, the recording heads 17a to 17c, which will be described later). By the recording portion 9 ejecting ink onto the sheet P, an image is recorded on the sheet P. The ejection of ink in the recording portion 9 is controlled by the control device 110 incorporated in the printer 100.

In the sheet conveyance direction, on a downstream side (a left side in FIG. 1) of the first conveyance unit 5, a second conveyance unit 12 is disposed. The sheet P, having had an image recorded thereon by the recording portion 9, is then sent to the second conveyance unit 12. The ink having been ejected onto a surface of the sheet P is dried while the sheet P is passing through the second conveyance unit 12.

In the sheet conveyance direction, at a position that is downstream of the second conveyance unit 12 and close to a left side surface of the printer main body 1, a decurler portion 14 is disposed. The sheet P, having had the ink dried through the second conveyance unit 12, is then sent to the decurler portion 14, where a curl having been generated in the sheet P is corrected.

In the sheet conveyance direction, at a position that is downstream of (in FIG. 1, above) the decurler portion 14, a second sheet conveyance path 4b is disposed. After passing through the decurler portion 14, if no duplex recording is to be performed, the sheet P passes through the second sheet conveyance path 4b and is discharged onto a sheet discharge tray 15 disposed on an outside of the left side surface of the printer 100.

Further, below the second conveyance unit 12, a maintenance unit 19 and a cap unit 20 are disposed. When a purge is executed, the maintenance unit 19 horizontally moves to a position under the recording portion 9, wipes ink discharged through the ink ejection ports 18 of the recording heads 17a to 17c, and collects the wiped ink. Here, a purge refers to an operation of discharging thickened ink, foreign matter, bubbles, etc., from inside the ink ejection ports 18 by forcibly discharging ink from the ink ejection ports 18 of the recording heads 17a to 17c. To cap ink ejection surfaces of the recording heads 17a to 17c, the cap unit 20 horizontally moves to a position under the recording portion 9, and then further moves upward to be attached to lower surfaces of the recording heads 17a to 17c.

### [2. Configuration of Ink Flow Path including Negative Pressure Regulation Valve]

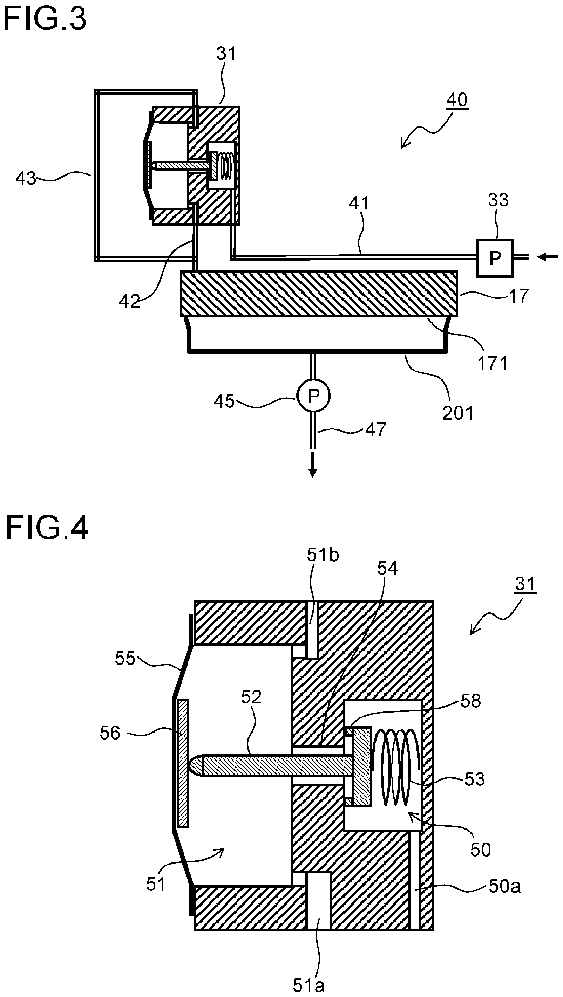

FIG. 3 is a schematic configuration diagram illustrating an arrangement of an ink flow path 40, a negative pressure regulation valve 31, and a recording head 17, the latter two being connected to the ink flow path 40. In the following description, the recording heads 17a to 17c will be simply referred to as the recording head 17. Further, up-down directions in FIGS. 3 and 4 correspond to a vertical direction (a direction of gravity).

The ink flow path 40 includes an ink inflow path 41, a first outflow path 42, and a second outflow path 43. Between the ink inflow path 41 and both the first outflow path 42 and the second outflow path 43, the negative pressure regulation valve 31 is connected.

Ink having been introduced from the ink container 30 (see FIG. 1) into the ink flow path 40 is supplied to the recording head 17 via the ink inflow path 41, the negative pressure regulation valve 31, the first outflow path 42, and the second outflow path 43. To the ink inflow path 41, a pressure pump 33 is connected. The pressure pump 33 maintains pressure inside an inflow-side pressure chamber 50 (see FIG. 4) at a constant pressure that is higher than pressure inside an outflow-side pressure chamber 51 (see FIG. 4).

Note that a configuration may be adopted in which the pressure pump 33 is not provided and the ink container 30 is disposed at a position higher than the negative pressure regulation valve 31 to use hydraulic head pressure of ink to maintain constant pressure inside the inflow-side pressure chamber 50. In a case where a sub tank (unillustrated) is disposed between the ink container 30 and the negative pressure regulation valve 31, the sub tank is located at a position higher than the negative pressure regulation valve 31.

To the recording head 17, a cap 201 is attached. The cap 201 is supported in the cap unit 20 (see FIG. 1), and is attached to an ink ejection surface (nozzle surface) 171 of the recording head 17 when no printing process is to be executed for a certain period of time or longer. In the cap 201, a flow path (unillustrated) is provided that communicates with atmosphere. This flow path is openable and closable so that change of temperature in a space between the ink ejection surface 171 and the cap 201 will not cause excessive change of pressure in ink ejection ports (nozzles) 18 of the recording head 17. With the cap 201 attached, the ink ejection surface 171 of the recording head 17 is maintained in a sealed state. To the cap 201, a suction pump 45 and a waste ink discharge path 47 are connected.

In the printer 100, in order to prevent insides of the ink ejection ports 18 (see FIG. 2) of the recording head 17 from becoming dry and to remove thickened ink, foreign matter, etc., from the insides of the ink ejection ports 18, when printing is started after a long period of stop, and between printing operations, the suction pump 45 performs, with the cap 201 attached to the ink ejection surface 171 and the flow path communicating with atmosphere closed, a suction purging process by sucking air from the space (sealed space) between the ink ejection surface 171 and the cap 201 to forcibly suck out ink from all the ink ejection ports 18 of the recording head 17, so as to be ready for the next printing operation. The ink (purged ink) having been sucked out from the recording head 17 into an inside of the cap 201 is discharged by the suction pump 45 to an outside of the cap 201, and is then collected via the waste ink discharge path 47 in a waste ink tank (unillustrated).

The suction purge process is also executed when initially filling the ink flow path 40 with an initial filling liquid or ink, when replacing the initial filling liquid in the ink flow path 40 with the ink, and when discharging air, foreign matter, etc., from inside the ink flow path 40.

In the present embodiment, the first outflow path 42 and the second outflow path 43 communicate with the recording head 17. In this configuration, the liquids in the first outflow path 42 and the second outflow path 43 are sucked by the suction pump 45 via the recording head 17 to flow into the waste ink discharge path 47. Thus, at the ink ejection ports (nozzles) 18 of the recording head 17, there are constant liquid flows from inside to outside the nozzles. Consequently, even if the suction pump 45 generates a negative pressure with an increased absolute value, there is no risk of a meniscus inside the ink ejection ports 18 being drawn to allow entry of bubbles into the ink ejection ports 18.

### [3. Configuration of Negative Pressure Regulation Valve]

FIG. 4 is a side sectional view of the negative pressure regulation valve 31 in the present embodiment of the present disclosure. The negative pressure regulation valve 31 stores therein ink that flows in the ink flow path 40, and also functions as a pressure regulation valve that opens and closes the ink flow path 40 in accordance with pressure on a side of the recording head 17. The negative pressure regulation valve 31 includes the inflow-side pressure chamber 50, the outflow-side pressure chamber 51, a valve member 52, and an opening/closing pressure regulation spring 53.

The inflow-side pressure chamber 50 includes an ink inflow hole 50a to which the ink inflow path 41 is coupled. The inflow-side pressure chamber 50 has a predetermined capacity for storing ink having flowed in through the ink inflow hole 50a. The inflow-side pressure chamber 50 communicates with the outflow-side pressure chamber 51 via a communication hole 54. In the inflow-side pressure chamber 50, one end part (a large-diameter part) of the valve member 52, which is capable of closing the communication hole 54, and the opening/closing pressure regulation spring 53 are housed.

The outflow-side pressure chamber 51 includes a first outflow hole 51a, to which the first outflow path 42 is coupled, a second outflow hole 51b, to which the second outflow path 43 is coupled, and a diaphragm portion 55. The outflow-side pressure chamber 51 stores ink having flowed in through the communication hole 54. The outflow-side pressure chamber 51 has a capacity that changes with displacement of the diaphragm portion 55.

The first outflow hole 51a is connected, via the first outflow path 42, to the recording head 17. The first outflow hole 51a is formed at a position lower than the communication hole 54. In the present embodiment, the first outflow hole 51a is formed in a lower end part of the outflow-side pressure chamber 51.

The second outflow hole 51b is connected, via the second outflow path 43, to the recording head 17. The second outflow hole 51b is formed at a position higher than the communication hole 54. In the present embodiment, the second outflow hole 51b is formed in an upper end part of the outflow-side pressure chamber 51. In the outflow-side pressure chamber 51, the other end part (a small-diameter part) of the valve member 52 and a pressure receiving plate 56 are housed.

In the present embodiment, the first outflow hole 51a is formed with a larger inner diameter than the second outflow hole 51b. That is, when ink (a first fluid) flows out from the outflow-side pressure chamber 51 via the first outflow hole 51a and the second outflow hole 51b, a first flow path resistance R1 generated when the ink passes through the first outflow hole 51a is lower than a second flow path resistance R2 generated when the ink passes through the second outflow hole 51b.

The valve member 52 is movable, in accordance with change of pressure inside the outflow-side pressure chamber 51, to a closing position for closing the communication hole 54, and an opening position for opening the communication hole 54 against a biasing force of the opening/closing pressure regulation spring 53. To an opening part of the communication hole 54 on a side of the inflow-side pressure chamber 50, an O ring 58 is attached. When the valve member 52 is located at the closing position, the one end part (the large-diameter part) of the valve member 52 is in contact with the O ring 58. When the valve member 52 is located at the opening position, the one end part (the large-diameter part) of the valve member 52 is separated from the O ring 58.

The diaphragm portion 55 is formed of a flexible resin film having a multi-layer structure. The diaphragm portion 55 is fixed to an outer side surface of the outflow-side pressure chamber 51 with a predetermined slack. The diaphragm portion 55 is displaced in accordance with change of pressure inside the outflow-side pressure chamber 51, thereby changing the capacity of the outflow-side pressure chamber 51.

The pressure receiving plate 56 is secured to an inner side surface (a resin layer facing the outflow-side pressure chamber 51) of the diaphragm portion 55, and is integrally movable with the diaphragm portion 55. At a central position on the pressure receiving plate 56, the other end part (the small-diameter part) of the valve member 52 inserted through the communication hole 54 is in contact with the pressure receiving plate 56. On the pressure receiving plate 56, a force acts, due to the biasing force of the opening/closing pressure regulation spring 53, via the valve member 52, in a direction of outwardly displacing (inflating) the diaphragm portion 55.

When ink is consumed in the recording head 17, and the pressure is reduced inside the outflow-side pressure chamber 51, the diaphragm portion 55 is inwardly displaced (deflated). Thereby, the pressure receiving plate 56, against the biasing force of the opening/closing pressure regulation spring 53, pushes the valve member 52 into the inflow-side pressure chamber 50 (the opening position) to open the communication hole 54. As a result, ink is supplied from the inflow-side pressure chamber 50 to the outflow-side pressure chamber 51. Then, when the pressure inside the outflow-side pressure chamber 51 reaches a predetermined negative pressure, the valve member 52 is pushed back into the outflow-side pressure chamber 51 (the closing position) to close the communication hole 54, and the supply of ink from the inflow-side pressure chamber 50 to the outflow-side pressure chamber 51 is stopped. In this manner, pressure is regulated to supply ink to the recording head 17.

In an execution of the suction purge process, the ink ejection surface 171 of the recording head 17 is covered with the cap 201, and, with the flow path allowing communication between the inside of the cap 201 and atmosphere closed, the suction pump 45 sucks air from the space (the sealed space) between the ink ejection surface 171 and the cap 201 to generate a negative pressure. Thereby, the valve member 52 moves to the opening position to open the communication hole 54, allowing the liquid (the ink or the initial filling liquid) inside the recording head 17 to be discharged through the ink ejection ports 18.

At this time, the outflow-side pressure chamber 51 inside the negative pressure regulation valve 31 has a negative pressure, and the valve member 52 is pushed by the diaphragm portion 55. As a result, the valve member 52 moves into the inflow-side pressure chamber 50 against the biasing force of the opening/closing pressure regulation spring 53 to open the communication hole 54, allowing communication between the inflow-side pressure chamber 50 and the outflow-side pressure chamber 51. Thereby, the liquid flows from the ink container 30, via the ink inflow path 41, the negative pressure regulation valve 31, the first outflow path 42, and the second outflow path 43, into the recording head 17.

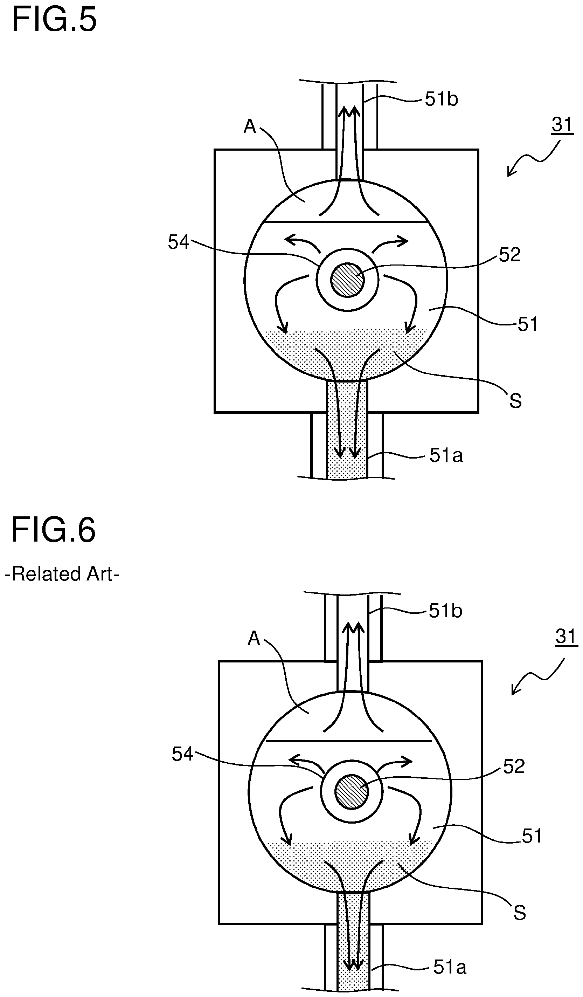

FIG. 5 is a schematic diagram illustrating the negative pressure regulation valve 31 as seen from the front side (the left side in FIG. 4), and illustrates how liquid (the initial filling liquid or the ink) and air are discharged during an execution of the suction purge process. Solid matter S such as a solidified ink component, foreign matter, etc., included in the liquid caused by the suction purge process to flow from the communication hole 54 into the outflow-side pressure chamber 51, stays in a lower part of the outflow-side pressure chamber 51. Thus, the solid matter S flows out from the first outflow hole 51a formed in the lower part of the outflow-side pressure chamber 51, via the first outflow path 42, into the recording head 17.

Further, air A contained in the liquid that flows into the outflow-side pressure chamber 51 stays in an upper part of the outflow-side pressure chamber 51. Thus, the air A flows out from the second outflow hole 51b formed in the upper part of the outflow-side pressure chamber 51, via the second outflow path 43, into the recording head 17.

According to the configuration of the present embodiment, the air A inside the outflow-side pressure chamber 51 smoothly and efficiently flows out from the second outflow hole 51b, which is disposed above the communication hole 54, via the second outflow path 43, and thus does not remain in the outflow-side pressure chamber 51. Thus, it is possible to reduce a flow amount of initial filling liquid in a case where the ink flow path 40 is filled with the initial filling liquid prior to shipment of the printer 100.

In the present embodiment, by forming the first outflow hole 51a with a larger inner diameter than the second outflow hole 51b, the first flow path resistance R1 generated when the ink (here, the first fluid) passes through the first outflow hole 51a is made lower than the second flow path resistance R2 generated when the ink passes through the second outflow hole 51b (R1<R2). With this configuration, in a case where ink component solidification or foreign matter intrusion occurs while the printer 100 is in use, the suction purge process is executed, allowing the solid matter S to smoothly and efficiently flow out from the first outflow hole 51a via the first outflow path 42.

As a comparative example, a case will be described where, as shown in FIG. 6, the first outflow hole 51a and the second outflow hole 51b have equal inner diameters, in other words, a case where the first flow path resistance R1 and the second flow path resistance R2 are equal. In this case, the air A is discharged quickly from the second outflow hole 51b quickly, but a highly dense liquid (the ink including the solid matter S) is discharged slowly from the first outflow hole 51a.

Consequently, the configuration of the present embodiment allows the solid matter S to flow out from the first outflow hole 51a with an improved efficiency, and thus the suction purge process can be performed with a reduced amount of ink. Further, since the solid matter S does not remain in the outflow-side pressure chamber 51, it is possible to avoid the problem of the solid matter S being caught in a space between the valve member 52 and the communication hole 54 to prevent the valve member 52 from moving.

Further, in a case where, prior to shipment of the printer 100, the ink flow path 40 in an empty state is filled with the initial filling liquid, that is, in a case where the initial filling liquid (here, the first fluid) is supplied to the inflow-side pressure chamber 50, and air (a second fluid that does not mix with the first fluid and that has a lower density than the first fluid) exists in at least part of the outflow-side pressure chamber 51, the first flow path resistance R1 generated when the initial filling liquid (the first fluid) passes through the first outflow hole 51a is made higher than a third flow path resistance R3 generated when air (the second fluid) passes through the second outflow hole 51b (R1 > R3).

Gases such as air, bubbles, etc., are much less viscous than liquids such as ink, the first filling liquid, etc., and thus can flow out without any obstacle even with a high flow path resistance. Thus, by setting the first flow path resistance R1 and the third flow path resistance R3 as described above, it is possible to discharge air or bubbles existing in the outflow-side pressure chamber 51 smoothly through the second outflow hole 51b, which has a smaller inner diameter than the first outflow hole 51a, and thus to reduce the flow amount of the initial filling liquid when filling the ink flow path 40 with the initial filling liquid.

Further, in a case where, prior to shipment of the printer 100, ink existing in the recording head 17 or the ink flow path 40 is replaced with the initial filling liquid suitable for transportation, that is, in a case where the initial filling liquid (here, the first fluid) is supplied to the inflow-side pressure chamber 50 and ink (a third fluid that has a higher density than the first fluid) exists in at least part of the outflow-side pressure chamber 51, it is preferable that the second flow path resistance R2 generated when the first filling liquid (the first fluid) passes through the second outflow hole 51b be made equal to or higher than a fourth flow path resistance R4 generated when the ink (the third fluid) passes through the first outflow hole 51a (R2 ≥ R4).

In the case where, as shown in FIG. 6, the first outflow hole 51a and the second outflow hole 51b have equal inner diameters, the second flow path resistance R2 generated when the initial filling liquid (the first fluid) passes through the second outflow hole 51b is lower than the fourth flow path resistance R4 generated when the ink (the third fluid) passes through the first outflow hole 51a. Thus, even after the air A in the outflow-side pressure chamber 51 is discharged through the second outflow hole 51b, the initial filling liquid is likely to flow out through the second outflow hole 51b. Further, the efficiency of ink discharge through the first outflow hole 51a is degraded.

By setting the second flow path resistance R2 and the fourth flow path resistance R4 as described above, it is possible to discharge ink through the first outflow hole 51a substantially simultaneously with, or a little earlier than, the discharge of the initial filling liquid through the second outflow hole 51b. Consequently, no ink remains in the outflow-side pressure chamber 51, and thus it is possible to reduce the flow amount of the initial filling liquid when replacing ink with the initial filling liquid. Further, since ink is less likely to remain in the outflow-side pressure chamber 51, it is possible to suppress clogging of the ink flow path 40 caused by solidification of ink during transportation.

Further, in a case where the ink existing in the recording head 17 or the ink flow path 40 is replaced with the initial filling liquid when installing the printer 100, that is, in a case where the ink (here, the first fluid) is supplied to the inflow-side pressure chamber 50 and the initial filling liquid (here, a fourth fluid having a lower density than the first fluid) exits in at least part of the outflow-side pressure chamber 51, it is preferable to set the first flow path resistance R1 generated when the ink (the first fluid) passes through the first outflow hole 51a to be equal to or higher than a fifth flow path resistance R5 generated when the initial filling liquid (the fourth fluid) passes through the second outflow hole 51b (R1 ≥ R5).

When replacing the initial filling liquid with the ink, the initial filling liquid having a low density moves to the upper part of the outflow-side pressure chamber 51, while the ink having a high density moves to the lower part of the outflow-side pressure chamber 51. By setting the first flow path resistance R1 and the fifth flow path resistance R5 as described above, it is possible to discharge the initial filling liquid through the second outflow hole 51b substantially simultaneously with, or a little earlier than, the discharge of the ink through the first outflow hole 51a. Accordingly, no initial filling liquid remains in the outflow-side pressure chamber 51, and thus it is possible to reduce a flow amount of the ink when replacing the initial filling liquid inside the ink flow path 40 with the ink.

Selection between setting the second flow path resistance R2 and the fourth flow path resistance R4 to R2 ≥ R4 and setting the first flow path resistance R1 and the fifth flow path resistance R5 to R1 ≥ R5 may be made in accordance with scenes and frequency in and with which the suction purge process is executed in the printer 100. Note that, however, the operation of replacing the ink existing in the ink flow path 40 with the initial filling liquid suitable for transportation is often performed in factories prior to shipment of the printer 100. On the other hand, the operation of replacing the initial filling liquid in the ink flow path 40 with the ink is often performed when the printer 100 is installed at a user's location.

Therefore, to reduce time taken to replace the initial filling liquid existing in the recording head 17 or the ink flow path 40 with the ink during the installation of the printer 100, it is preferable to set R1 ≥ R5. Moreover, setting R1= R5 (R2 = R4) is advantageous for both the operation of replacing the ink with the initial filling liquid and the operation of replacing the initial filling liquid with the ink.

It should be understood that the present disclosure is not limited to the above embodiments, and various modifications are possible within the scope of the present disclosure. For example, in the above embodiment, by forming the first outflow hole 51a and the second outflow hole 51b to have different inner diameters, the first flow path resistance R1 generated when the ink (the first fluid) passes through the first outflow hole 51a is made smaller than the second flow path resistance R2 generated when the ink passes through the second outflow hole 51b, but other methods may be used to regulate the first flow path resistance R1 and the second flow path resistance R2.

Specifically, by forming the first outflow hole 51a to have a shorter length (flow path length) than the second outflow hole 51b, the first flow path resistance R1 can be made lower than the second flow path resistance R2. Further, by bending the second outflow hole 51b once or more or by forming the second outflow hole 51b to have a part (narrow part) having a smaller inner diameter, the flow path resistance in the second outflow hole 51b can be increased, and thus the first flow path resistance R1 can be made lower than the second flow path resistance R2.

Further, exemplified in the above embodiment as components connected to the ink flow path 40 are the recording head 17, the negative pressure regulation valve 31, the pressure pump 33, and the suction pump 45, but the present disclosure is applicable to configurations where other components are connected to the ink flow path 40.

Further, described in the above embodiment is an example where used as an inkjet recording apparatus is a color printer which records color images using inks in four colors, the ink supply unit of the present embodiment is usable also in a case where a monochrome printer is used which records a monochrome image using a black ink.

The present disclosure is usable in a negative pressure regulation valve connected between a liquid reservoir portion such as an ink container and a liquid ejection portion such as a recording head, and in an inkjet recording apparatus such as an inkjet printer that includes the negative pressure regulation valve.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A negative pressure regulation valve (31) connected to a liquid flow path (40) that allows communication between a liquid reservoir portion (30), which contains a liquid, and a liquid ejection portion (17), which ejects the liquid, the negative pressure regulation valve (31) comprising:
an inflow-side pressure chamber (50) including a liquid inflow hole (50a) that communicates with a liquid inflow path (41) that is the liquid flow path (40) on a side of the liquid reservoir portion (30);
an outflow-side pressure chamber (51) including a liquid outflow hole (51a, 51b) that communicates with a liquid outflow path (42, 43) that is the liquid flow path (40) on a side of the liquid ejection portion (17);
a communication hole (54) that allows communication between the inflow-side pressure chamber (50) and the outflow-side pressure chamber (51); and
a valve member (52) inserted in the communication hole (54) and movable, in accordance with change of pressure inside the outflow-side pressure chamber (51), to a closing position for closing the communication hole (54) and an opening position for opening the communication hole (54),
**characterized in that**
the outflow-side pressure chamber (51) includes, as the liquid outflow hole (51a, 51b),
a first outflow hole (51a) formed below the communication hole (54) and
a second outflow hole (51b) formed above the communication hole (54), and
in a case where a first fluid flows out from the outflow-side pressure chamber (51) via the first outflow hole (51a) and the second outflow hole (51b), a first flow path resistance (R1) generated when the first fluid passes through the first outflow hole (51a) is lower than a second flow path resistance (R2) generated when the first fluid passes through the second outflow hole (51b).

2. The negative pressure regulation valve (31) according to claim 1,
wherein
the first outflow hole (51a) has a larger inner diameter than the second outflow hole (51b).

3. The negative pressure regulation valve (31) according to claim 1, further comprising:
a diaphragm portion (55) that constitutes part of the outflow-side pressure chamber (51) and that is displaced by pressure change inside the outflow-side pressure chamber (51), thereby changing capacity of the outflow-side pressure chamber (51); and
a biasing member (53) that biases the valve member (52) in a direction toward the closing position,
wherein
the valve member (52) is caused by displacement of the diaphragm portion (55) and a biasing force of the biasing member (53) to move to the closing position and the opening position.

4. The negative pressure regulation valve (31) according to claim 2 or 3,
wherein
in a case where the first fluid is supplied from the liquid reservoir portion (30) to the inflow-side pressure chamber (50) and in at least part of the outflow-side pressure chamber (51), a second fluid exists that does not mix with the first fluid and has a lower density than the first fluid, the first flow path resistance (R1) is higher than a third flow path resistance (R3) generated when the second fluid passes through the second outflow hole (51b).

5. The negative pressure regulation valve (31) according to claim 4,
wherein
the first fluid is a liquid, and the second fluid is a gas.

6. The negative pressure regulation valve (31) according to claim 1,
wherein
in a case where the first fluid is supplied from the liquid reservoir portion (30) to the inflow-side pressure chamber (50) and in at least part of the outflow-side pressure chamber (51), a third fluid exists that has a higher density than the first fluid, the second flow path resistance (R2) is equal to or higher than a fourth flow path resistance (R4) generated when the third fluid passes through the first outflow hole (51a).

7. The negative pressure regulation valve (31) according to claim 6,
wherein
the first fluid and the third fluid are liquids.

8. The negative pressure regulation valve (31) according to claim 1,
wherein
in a case where the first fluid is supplied from the liquid reservoir portion (30) to the inflow-side pressure chamber (50) and in at least part of the outflow-side pressure chamber (51), a fourth fluid exists that does not mix with the first fluid and has a lower density than the first fluid, the first flow path resistance (R1) is equal to or higher than a fifth flow path resistance (R5) generated when the fourth fluid passes through the second outflow hole (51b).

9. The negative pressure regulation valve (31) according to claim 8,
wherein
the first fluid and the fourth fluid are liquids.

10. An inkjet recording apparatus (100), comprising:
an ink container (30) that contains ink that is a liquid;
one or more recording heads (17) having a plurality of nozzles (18) that eject the ink; and
the negative pressure regulation valve (31) according to claim 1 connected to an ink flow path (40) between the ink container (30) and the recording heads (17).

11. The inkjet recording apparatus (100) according to claim 10,
wherein
the ink flow path (40) includes
a first outflow path (42) that communicates with the first outflow hole (51a), and
a second outflow path (43) that communicates with the second outflow hole (51b), and
the first outflow path (42) and the second outflow path (43) communicate with the recording heads (17).
